# EUROPÄISCHE PATENTSCHRIFT

(11) **EP 3 803 153 B1**
(45) Veröffentlichungstag und Bekanntmachung des Hinweises auf die Patenterteilung: **19.07.2023**
(21) Anmeldenummer: 19735628.0
(22) Anmeldetag: 17.05.2019
(51) Int. Cl.: F16H 49/00, F16G 1/28

(54) **GETRIEBE MIT ZUGMITTEL**
TRANSMISSION COMPRISING TRACTION MEANS
ENGRENAGE AVEC MOYEN DE TRACTION

(30) Priorität: 31.05.2018 WO PCT/IB2018/053897
(43) Veröffentlichungstag der Anmeldung: 14.04.2021
(60) Teilanmeldung: 23179082.5
(73) Patentinhaber: TQ-Systems GmbH, 82229 Seefeld (DE)
(72) Erfinder: ROSSBERGER,, Antonius Georg, 82229 Seefeld (DE)
(74) Vertreter: Schweiger, Martin
(86) Internationale Anmeldenummer: PCT/IB2019/054085
(87) Internationale Veröffentlichungsnummer: WO 2019/229574

(56) Entgegenhaltungen:
- EP-A2- 2 625 441
- EP-A2- 2 672 147
- WO-A2-2006/119033
- DE-A1-102014 115 043
- DE-C- 3 738 521
- DE-C1- 3 738 521
- KR-A- 20100 070 607

## Beschreibung

Die vorliegende Erfindung bezieht sich auf ein Getriebe mit einem Zugmittel mit einer Innen- und einer Außenverzahnung.

Die DE 10 2014 115043 A1 offenbart in seiner Fig.5 ein Getriebe mit einem Zahnriemen mit einer Innen- und einer Außenverzahnung.

Die EP 2 672 147 A2 offenbart in seiner Fig.47 und in seinem Absatz [0146] ein Getriebe mit einem als Zahnriemen ausgestalteten Zugmittel, wobei der Zahnriemen eine Innen- und eine Außenverzahnung aufweist.

Die EP 2 625 441 A2 offenbart in seinen Fig.69-72 ein Zugmittel (="multi-layer pin ring"), welches aus einem Stahlring und einem Aufnahmering besteht. Der Aufnahmering weist Öffnungen auf, in die Stifte (="pins") eingesetzt werden. Zudem offenbart die EP 2 625 441 A2 auch ein Getriebe, in dem dieses Zugmittel verwendet wird.

Die KR 2010 0070607 A offenbart in ihrer Fig.9b ein als Zahnriemen ausgestaltetes Zugmittel, wobei der Zahnriemen eine Innen- und eine Außenverzahnung aufweist. Der Zahnriemen weist zudem zentral eine glatte Fläche auf. Des Weiteren wird auch ein Getriebe offenbart, in dem dieser Zahnriemen verwendet wird.

Die DE 37 38 521 C offenbart in ihren Fig.2 und 13 ein als Zahnriemen (="flexibles Planetenrad") ausgestaltetes Zugmittel, wobei der Zahnriemen eine Innen- und eine Außenverzahnung aufweist. Des Weiteren wird ein Getriebe offenbart, in dem dieser Zahnriemen verwendet wird.

Aufgabe der vorliegenden Erfindung ist es, ein Getriebe mit einem Zugmittel mit einer Innen- und einer Außenverzahnung vorzuschlagen.

Anspruch 1 definiert ein Getriebe für das Schutz begehrt wird. Anspruch 2 betrifft eine besondere Ausführungsform der in Anspruch 1 beanspruchten Erfindung.

Gemäß einer weiteren besonderen Ausführungsform der Erfindung kann ein Stromerzeuger mit einer Antriebseinheit, mit einer Generatoreinheit zum Erzeugen von Strom und mit einem oben genannten Getriebe vorgesehen sein, wobei eine Eingangswelle des Getriebes mit der Antriebseinheit verbunden sein kann und wobei eine Ausgangswelle des Getriebes mit einer Eingangswelle des Generators verbunden sein kann.

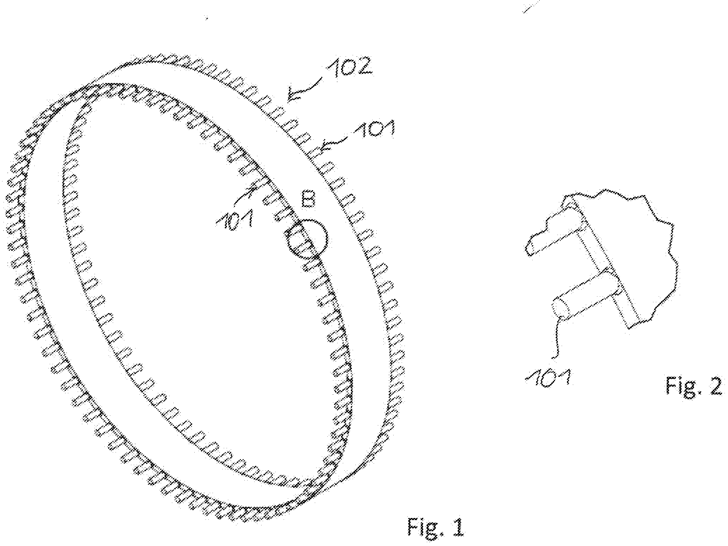

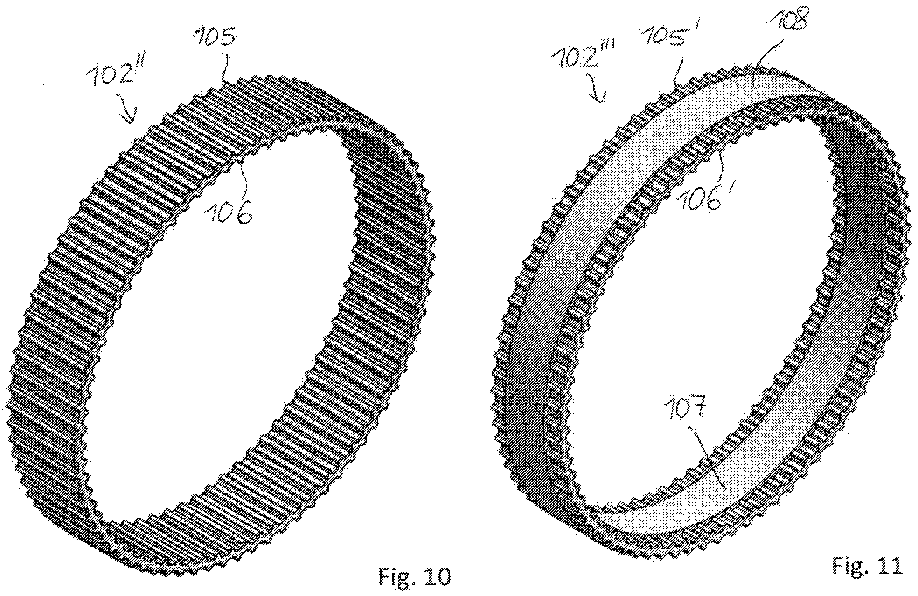

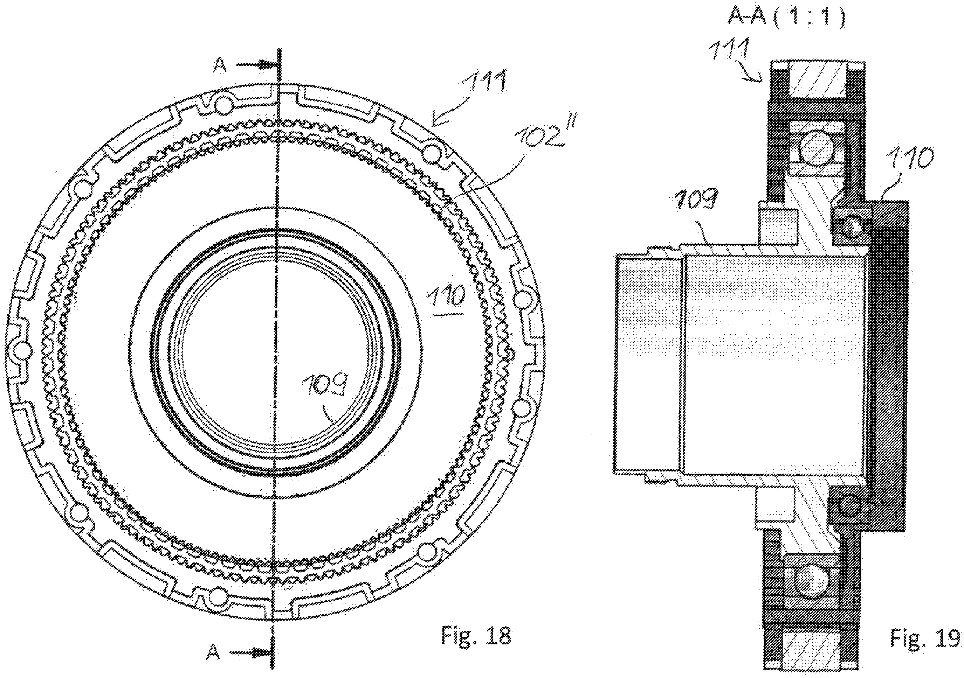

Der Gegenstand der beanspruchten Erfindung wird anhand einiger der folgenden Figuren beschrieben. Jedoch zeigt keine der Figuren ein Getriebe, welches alle Merkmale des Anspruchs 1 aufweist. Fig.11 zeit einen Zahnriemen, der unter den Wortlaut des in Anspruch 1 als ein Teil des beanspruchten Getriebes beschriebenen Zahnriemens fällt. Dahingegen zeigen die Fig.1-10, 12-17 und 28-30 Zugmittel, die nicht unter den Wortlaut des in Anspruch 1 beschriebenen Zahnriemens fallen. Die Fig.18-20 zeigen ein Getriebe, in dem der in Fig.11 gezeigte Zahnriemen anstatt des darin dargestellten Zahnriemens verwendet werden kann.
- Figur 1: zeigt eine perspektivische Ansicht einer ersten Ausführungsform eines Pinrings mit Lücken-Anordnung der Pins,
- Figur 2: zeigt eine Ausschnittsvergrößerung des Pinrings von Fig. 1,
- Figur 3: zeigt eine Seitenansicht des Pinrings von Fig. 1,
- Figur 4: zeigt einen Querschnitt des Pinrings entlang der Querschnittline A-A von Fig. 3,
- Figur 5: zeigt eine Frontalansicht des Pinrings von Fig. 1,
- Figur 6: zeigt eine perspektivische Ansicht einer zweiten Ausführungsform eines Pinrings mit Lücken-Anordnung der Pins,
- Figur 7: zeigt eine Frontalansicht des Pinrings von Fig. 6,
- Figur 8: zeigt eine Seitenansicht des Pinrings von Fig. 6,
- Figur 9: zeigt eine Querschnittsansicht des Pinrings von Fig. 6 entlang der Schnittline A-A von Fig. 8,
- Figur 10: zeigt eine perspektivische Ansicht eines Pinrings bzw. Zahnriemens mit versetzter Lücken-Anordnung, wobei die Pins bzw. Zähne der Innen- und Außenverzahnungen gegeneinander versetzt sind,
- Figur 11: zeigt eine perspektivische Ansicht eines weiteren Pinrings mit versetzter Lücken-Anordnung mit einem zentralen Auflagebereich an Innen- und Außenseite,
- Figur 12: zeigt eine perspektivische Ansicht eines weiteren Pinrings mit versetzter Lücken-Anordnung mit einem zentralen Auflagebereich an der Innenseite,
- Figur 13: zeigt eine perspektivische Ansicht eines weiteren Pinrings mit symmetrischer Lücken-Anordnung, bei dem die Zähne bzw. Pins der Innen- und Außenverzahnung einander gegenüberliegen,
- Figur 14: zeigt eine perspektivische Ansicht eines weiteren Pinrings mit symmetrischer Lücken-Anordnung, bei dem zwischen den Pins radiale Zwischenräume angeordnet sind,
- Figur 15: zeigt eine perspektivische Ansicht eines weiteren Pinrings bzw. Zahnriemens mit bei dem die Zahngründe jeweils die Zahnköpfe der radial gegenüberliegenden Verzahnung bilden,
- Figur 16: zeigt eine Ausschnittvergrößerung von Fig. 14,
- Figur 17: zeigt eine Ausschnittvergrößerung von Fig. 15,
- Figur 18: zeigt eine abtriebsseitige Frontalansicht eines Harmonic-Pinring-Getriebes,
- Figur 19: zeigt einen Querschnitt entlang der Schnittlinie A-A von Fig. 18,
- Figur 20: zeigt eine Explosionsansicht des Getriebes von Figur 18,
- Figur 21: zeigt ein Getriebe mit einem dreipoligen Stator, der einen Pinring durch elektromagnetische Kräfte verschiebt,
- Figur 22: zeigt ein Getriebe mit einem sechspoligen Stator, der einen Pinring durch elektromagnetische Kräfte verschiebt,
- Figur 23: zeigt ein Getriebe mit einem dreipoligen Stator, der einen Pinring durch elektromagnetische Kräfte verformt,
- Figur 24: zeigt ein Getriebe mit einem sechspoligen Stator, der einen Pinring durch elektromagnetische Kräfte verformt,
- Figur 25: zeigt ein Getriebe mit einem sechspoligen Stator, der eine innere Verzahnung durch elektromagnetische Kräfte verschiebt,
- Figur 26: zeigt ein Getriebe mit einem sechspoligen Stator, der eine innere Verzahnung durch elektromagnetische Kräfte verschiebt,
- Figur 27: zeigt eine Bestromung von Statorwindungen des Getriebes von Fig. 21,
- Figur 28: zeigt einen Querschnitt durch einen Pinring mit einer symmetrischen Lücken-Anordnung, und
- Figur 29: zeigt einen Querschnitt durch einen Pinring mit einer verschobenen Lücken-Anordnung,
- Figur 30: zeigt einen Querschnitt durch einen Pinring mit einer verschobenen Lücken-Anordnung, bei der eine Rückseite der Innenverzahnung die Außenverzahnung bildet.

Fig. 1 zeigt eine perspektivische Ansicht einer ersten Ausführungsform eines Pinrings 201 mit Lücken-Anordnung der Pins 101. Bei einer Lückenanordnung von Pins bzw. Zähnen ist zwischen zwei Pins bzw. Zähnen ein Zwischenraum angeordnet, der mindestens so breit wie eine Breite der Pins bzw. Zähne ist. Als Zahnbreite kann beispielsweise die Erstreckung eines Zahns in Umfangsrichtung auf halber Höhe zwischen Zahngrund und Zahnkopf angesehen werden. Nach einer alternativen Definition entspricht die Zahnbreite der Breite auf Höhe eines Wälzkreises.

Wenn der Pinring mit der Lückenanordnung in ein Getriebe eingebaut ist, dann greift abwechselnd ein Pin oder ein Zahn eines Zugmittels in einen Zahngrund der jeweiligen Außen- oder Innenverzahnung des Getriebes ein, und ein im Umfangsrichtung benachbarter Zahngrund ist ohne Eingriff. Dies gilt für einen Eingriffsbereich, in dem die Pins mit der jeweiligen Innen- oder Außenverzahnung in Eingriff stehen.

Fig. 2 zeigt eine Ausschnittvergrößerung des Pinrings 102 von Fig. 1, in der ein Übergangsbereich zwischen den Pins 101 und einem zentralen Auflagering gezeigt ist. Gemäß dem Ausführungsbeispiel von Fig. 1 bis 5 ist der Pinring aus einem Stück gefertigt. Beispielsweise können die seitlich hervorstehenden Pins aus einem Werkstück herausgefräst oder gestanzt sein.

Als Werkstoff für den Pinring 102 von Fig. 1 sowie für die anderen in der vorliegenden Beschreibung offenbarten Pinringe oder Zahnriemen eignet sich beispielsweise eine Stahllegierung, die sich durch gute Stanzbarkeit und Umformbarkeit auszeichnet. Insbesondere kann es sich dabei um eine Mangan-Chrom Stahllegierung wie beispielsweise 16MnCr5, Werkstoffnummer 1.7131 handeln.

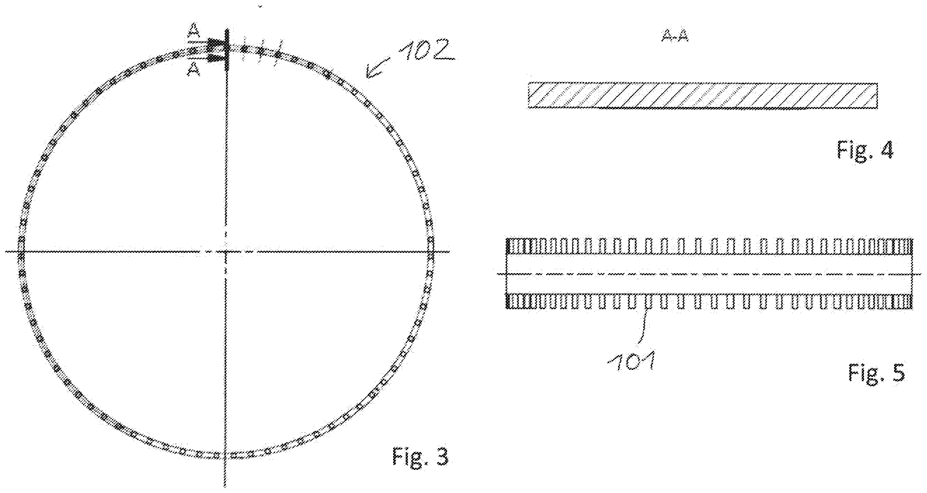

Fig. 3 zeigt eine Seitenansicht des Pinrings 102 von Fig. 1, in der ein Winkelabstand zwischen den Pins eingezeichnet ist.

Dieser Winkelabstand hängt von einem Radius des Pinrings und von einer Anzahl der gleichmäßig über dem Umfang verteilten Pins ab und beträgt 4,8 Grad im Beispiel von Fig. 3.

Fig. 4 zeigt einen Querschnitt des Pinrings 102 entlang der Schnittlinie A-A von Fig. 3. Wie in Fig. 4 erkennbar ist ein Durchmesser der Pins ungefähr so groß wie eine Dicke des zentralen Auflagerings.

Fig. 5 zeigt eine Frontalansicht des Pinrings 102 von Fig. 1, in der der zentrale Auflagering und die Pins, die rechts und links von dem zentralen Auflagering in axialer Richtung abstehen, gezeigt sind.

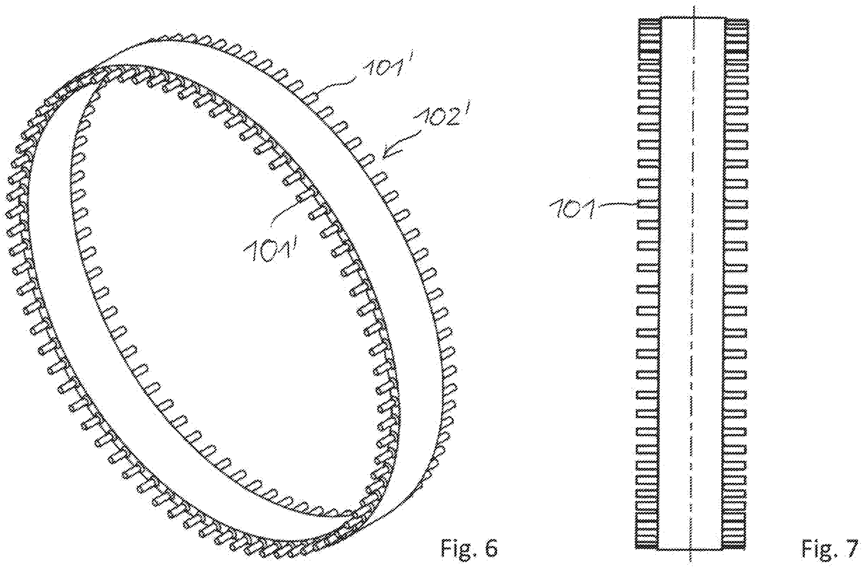

Fig. 6 zeigt eine perspektivische Ansicht einer zweiten Ausführungsform eines Pinrings 102' mit Lücken-Anordnung der Pins 101'. Diese Ausführungsform unterscheidet sich von der Ausführungsform von Fig. 1 dadurch, dass der Durchmesser der Pins geringer als eine Dicke des zentralen Auflagerings ist

Fig. 7 zeigt eine Frontalansicht des Pinrings 102' von Fig. 6.

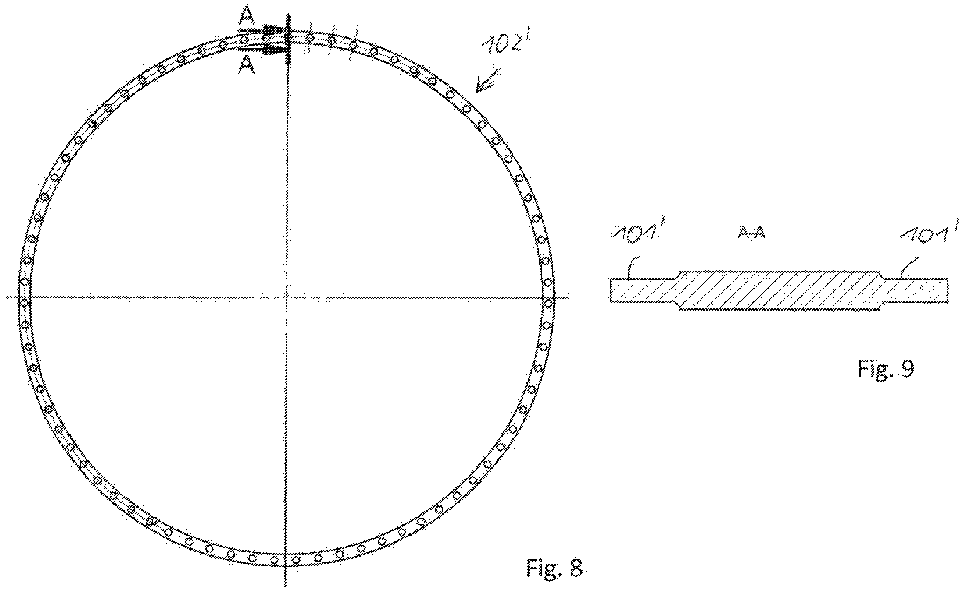

Fig. 8 zeigt eine Seitenansicht des Pinrings 102' von Fig. 6.

Fig. 9 zeigt eine Querschnittsansicht des Pinrings 102' von Fig. 6 entlang der Schnittline A-A von Fig. 8. Der Pinring 102' ist so gefertigt, dass der Durchmesser des Werkstücks sich in axialer Richtung nach außen in einem Übergangsbereich auf einen Durchmesser der Pins verjüngt, der hier in etwa zwei Drittel der Dicke des zentralen Auflagerings beträgt.

Die Figuren 10 bis 13, 15 und 17 zeigen Pinringe, die in der Art eines Zahnriemens ausgeführt sind sowie eine Außenverzahnung und eine Innenverzahnung aufweisen, wobei die Anzahl der Zähne der Außenverzahnung mit der Anzahl der Zähne der Innenverzahnung übereinstimmt. Die Zähne können auch als Pins angesehen werden und die Pinringe von Fig. 10 bis 13, 15 und 17 werden auch als Doppel-Pinringe oder Doppel-Zahnringe bezeichnet.

Die Pinringe der Figuren 10 - 17 können aus einem elastischen Material gefertigt sein und/oder geeignet dimensioniert sein, so dass sie sich insbesondere für eine ovale bzw. ellipsoide Verformung eignen, wobei der Ort der Verformung durch einen radial innerhalb des jeweiligen Pinrings angeordneten rotierenden Transmitter auf einer Kreisbahn rotiert.

Die Pinringe der Figuren 10 - 17 können auch aus einem unelastischen bzw. weniger elastischen Material gefertigt und/oder entsprechend dimensioniert sein, so dass sie sich dazu eignen, durch eine exzentrisch angeordnete zylinderförmige Kurvenscheibe eines Transmitters auf einer Kreisbahn geführt zu werden.

Insbesondere kann der Querschnitt der Zähne einem Querschnitt einer Hälfte eines Pins ähneln, also annähernd halbkreisförmig sein oder bis auf einen Übergangsbereich kreisabschnittsförmig sein. Vorzugsweise ist zumindest der obere Bereich der Zahnköpfe kreisabschnittsförmig abgerundet.

Dieser kreisabschnittsförmig abgerundete obere Bereich kann sich beispielsweise vom Zahnkopf aus gesehen über mindestens 30% oder mindestens 40% einer von der Mitte zwischen Zahngrund und Zahnkopf aus gemessenen Zahnhöhe erstrecken, wodurch einerseits ein größerer Übergangsbereich zwischen Zahnkopf und Zahngrund zu Verfügung gestellt werden kann und andererseits die Zahnform noch genügend ähnlich zu einer Pinform ist.

Durch den Übergangsbereich kann eine Elastizität bereitgestellt werden und es besteht eine Gestaltungsfreiheit, die Dimensionierung der Zahngeometrie des Zahnriemens an eine Außenverzahnung eines Innenrads oder an eine Innenverzahnung eines Außenrads anzupassen.

Gemäß anderer Ausführungsbeispiele kann sich der kreisabschnittsförmige abgerundete obere Bereich vom Zahnkopf aus gesehen über mindestens 70%, mindestens 80% oder mindestens 90% einer von der Mitte zwischen Zahngrund und Zahnkopf aus gemessenen Zahnhöhe erstrecken, wodurch eine möglichst gute Ähnlichkeit mit einer Pinform erreicht wird.

Gemäß anderer Ausführungsbeispiele kann sich der kreisabschnittsförmige abgerundete obere Bereich vom Zahnkopf aus gesehen über mindestens 50%, mindestens 60% von der Mitte zwischen Zahngrund und Zahnkopf aus gemessenen Zahnhöhe erstrecken, wodurch ein Kompromiss zwischen einer Pinähnlichen Zahnform und einem genügend breiten Übergangsbereich erzielt wird.

Der Zahngrund der Innenverzahnung und der Außenverzahnung kann dagegen flach ausgeführt sein, also einen Abschnitt eines Zylinders bilden, wie es beispielsweise in Fig. 10 bis 13 gezeigt ist.

Insbesondere kann die Zahnform der Innenverzahnung mit der Zahnform der Außenverzahnung übereinstimmen bzw. baugleich sein. Vorzugsweise entspricht die Zahnform der Innen- und der Außenverzahnung einer geradlinigen Zahnform bzw. einer Zahnform eines Stirnrads, die beispielsweise durch Fräsen einfach herzustellen ist. Eine in den Figuren nicht gezeigte Schrägverzahnung ist auch möglich.

Fig. 10 zeigt eine perspektivische Ansicht eines Pinrings 102'' bzw. Zahnriemens 102'' mit versetzter Lücken-Anordnung, wobei die Pins bzw. Zähne einer Innenverzahnung 106 und einer Außenverzahnung 105 gegeneinander versetzt sind. Und zwar liegt einem Zahn bzw. Pin der Außenverzahnung 105 jeweils ein Zahngrund bzw. Pin der Innenverzahnung 106 gegenüber.

Fig. 11 zeigt eine perspektivische Ansicht eines weiteren Pinrings 102‴ mit versetzter Lücken-Anordnung mit zentralen Auflagebereichen 107, 108 an Innen- und Außenseite, wobei eine Innenverzahnung 105' gegenüber einer Außenverzahnung 106' versetzt ist.

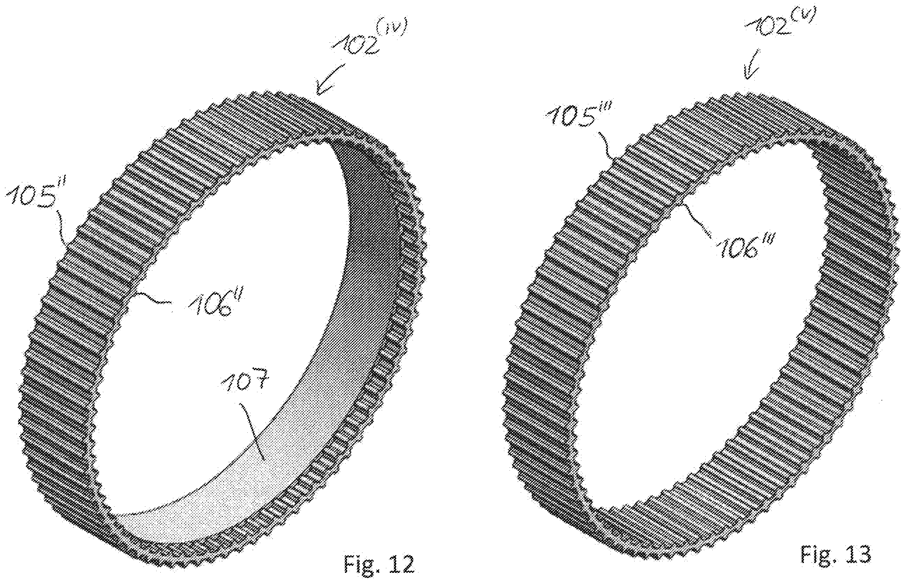

Fig. 12 zeigt eine perspektivische Ansicht eines weiteren Pinrings 102^{(IV)} mit versetzter Lücken-Anordnung mit einem zentralen Auflagebereich 107 an der Innenseite, wobei eine Innenverzahnung 105'' gegenüber einer Außenverzahnung 106'' versetzt ist.

Der zentrale Auflagebereich 107 an der Innenseite kann insbesondere dazu dienen, einen verbesserten Kontakt mit einer Kurvenscheibe bzw. einer Außenfläche eines Transmitters bereitzustellen und der zentrale Auflagebereich 108 an der Außenseite kann insbesondere dazu dienen, einen verbesserten Kontakt mit einer zylinderförmigen Auflagefläche eines Getriebegehäuses herzustellen, die der Außenfläche des Transmitters gegenüberliegt.

Wenn kein zentraler Auflagebereich an der Innenseite des Zahnriemens vorhanden ist, wie beispielsweise bei dem Zahnriemen von Fig. 12, dann kann für eine verbesserte Auflage eines Transmitters eine zur Innenverzahnung des Zahnriemens passende Außenverzahnung radial innerhalb des Zahnriemens angeordnet sein. Insbesondere bei einem Getriebe mit abgetriebenem Innenrad kann diese Außenverzahnung auf einem Kugellager angeordnet sein, wogegen diese Außenverzahnung bei einem nicht abgetriebenen, statischen Innenrad an einem Getriebegehäuse befestigt sein kann.

Wenn kein zentraler Auflagebereich an der Außenseite des Zahnriemens vorhanden ist, wie beispielsweise bei dem Zahnriemen von Fig. 12, dann kann für eine verbesserte Auflage eine zur Außenverzahnung des Zahnriemens passende Außenverzahnung radial außerhalb des Zahnriemens angeordnet sein. Insbesondere bei einem Getriebe mit abgetriebenem Außenrad kann diese Außenverzahnung auf einem Kugellager angeordnet sein, wogegen sie bei einem Getriebe mit nicht abgetriebenem, statischen Außenrad, wie bei dem Getriebe von Fig. 18 - 20, an einem Getriebegehäuse befestigt sein kann.

Eine Außenradverzahnung kann sich aber auch über die gesamte Breite des Zahnriemens erstrecken, wodurch ebenfalls ein guter Kontakt erreicht wird.

Fig. 13 zeigt eine perspektivische Ansicht eines weiteren Pinrings 102^{(V)} mit einer symmetrischen Lücken-Anordnung, bei dem die Zähne bzw. Pins einer Innenverzahnung 106‴ und einer Außenverzahnung 105''' einander gegenüberliegen.

Auch bei einem Zahnriemen mit symmetrischer Lücken-Anordnung, wie in Fig. 13, kann ein zentraler Auflagebereich an einer Innenseite des Zahnriemens oder an einer Außenseite des Zahnriemens vorgesehen sein.

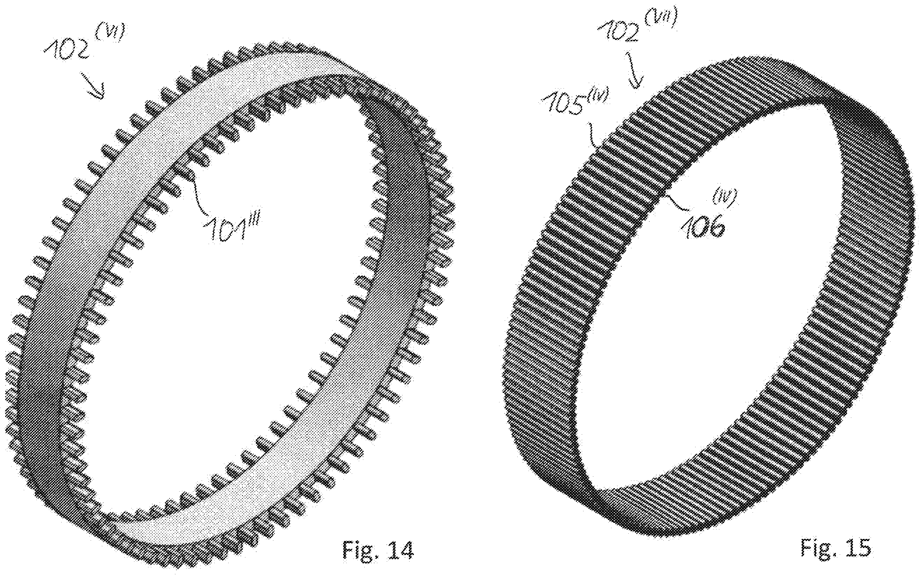

Fig. 14 zeigt eine perspektivische Ansicht eines weiteren Pinrings 102^{(VI)} mit symmetrischer Lücken-Anordnung, bei dem zwischen Pins 101''' radiale Zwischenräume angeordnet sind.

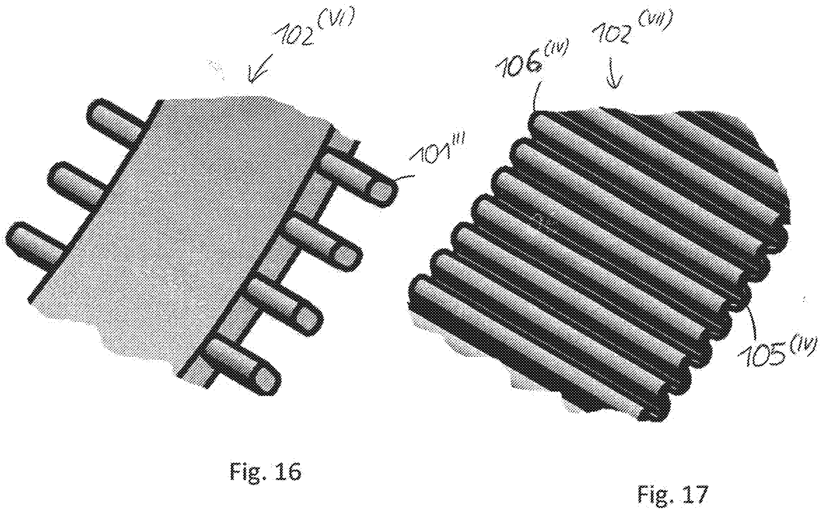

Bei dem Pinring von Fig. 14 sind die Pins 101‴ so geformt, dass ihr Querschnitt ein längliches Oval bildet, was besonders gut in der Ausschnittvergrößerung von Fig. 16 zu erkennen ist. Und zwar bildet der Querschnitt der Pins 101'' ein Rechteck mit zwei halbkreisförmigen Enden an den schmaleren Seiten des Rechtecks, wobei die halbkreisförmigen Enden jeweils gleich sein können.

Fig. 15 zeigt eine perspektivische Ansicht eines weiteren Pinrings 102^{(VII)} bzw. Zahnriemens oder Doppel-Zahnrings 102^{(VII)}, bei dem die Zahngründe jeweils die Zahnköpfe der radial gegenüberliegenden Verzahnung bilden. Somit bildet eine Rückseite einer Außenverzahnung 105^{(IV)} gleichzeitig eine Innenverzahnung 106^{(IV)} und umgekehrt.

Die Form des Doppel-Zahnrings ähnelt einem zylinderförmigen Wellblechstreifen, was besondere gut in der der Ausschnittvergrößerung von Fig. 17 erkennbar ist.

Die Ausführung des Doppel-Zahnrings gemäß Fig. 15 kann eine gute Elastizität bei einfacher und materialsparender Herstellung bereitstellen.

Fig. 16 zeigt eine Ausschnittvergrößerung von Fig. 14.

Fig. 17 zeigt eine Ausschnittvergrößerung von Fig. 15.

Fig. 18 zeigt eine abtriebsseitige Frontalansicht eines Harmonic-Pinring-Getriebes mit ovaler Kurvenscheibe, in der ein Pinring 102'' gemäß Fig. 10 als Zugmittel eingebaut ist, und in der, von innen nach außen, ein Innenbereich einer Rotor-Transmitter-Einheit 109 eines nicht gezeigten Innenläufermotors, eine Innenrad-Abtriebswellen-Einheit 110, ein Pinring 102'' gemäß Fig. 10 und eine Außenrad-Baugruppe 111 gezeigt sind.

Fig. 19 zeigt einen Querschnitt entlang der Schnittlinie A-A von Fig. 18. Die Innenrad-Abtriebswellen-Einheit 110 ist über ein Abtriebswellen-Kugellager auf der Rotor-Transmitter-Einheit gelagert. Ein verformbares Kugellager ist auf einer Kurvenscheibe der Rotor-Transmitter Einheit 109 gelagert und der Pinring gemäß Figur 12 ist auf dem verformbaren Kugellager angeordnet. Radial außerhalb des Pinrings ist die Außenradbaugruppe 111 angeordnet, die aus einem antriebsseitigen Außenring bzw. Außenrad, einem Außenrad-Halter, und einem abtriebsseitigen Außenring bzw. Außenrad besteht. Die Außenradbaugruppe ist an einem in Fig. 18 bis 20 nicht gezeigten Getriebegehäuse befestigt.

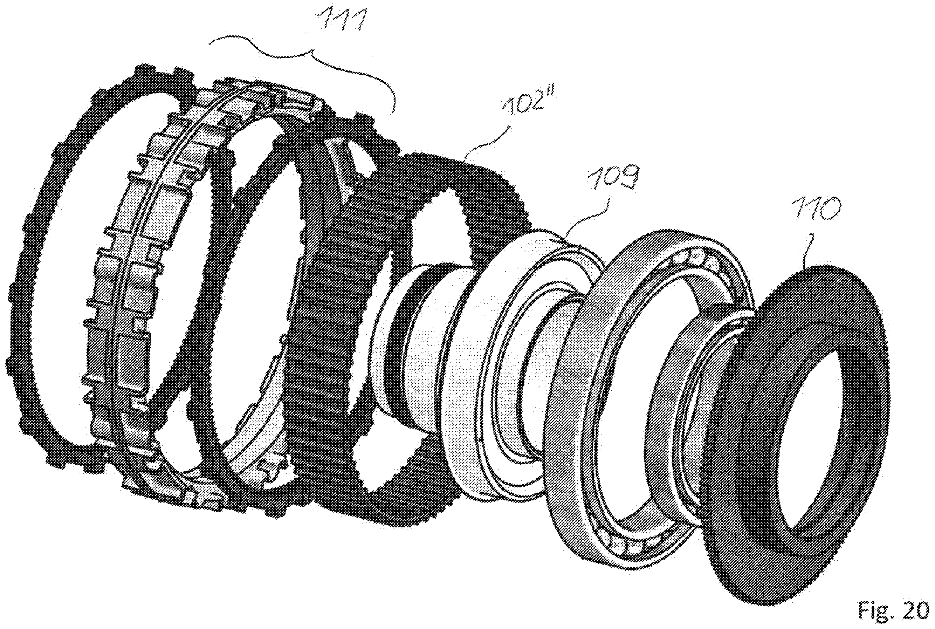

Fig. 20 zeigt eine Explosionsansicht des Getriebes von Fig. 18, in der von links nach rechts, der antriebsseitige Außenring bzw. das abtriebsseitige Außenrad, der Außenrad-Halter, der abtriebsseitige Außenring bzw. das abtriebsseitige Außenrad, der Pinring gemäß Fig. 13, die Rotor-Transmitter-Einheit 109, das verformbare Kugellager, das Abtriebswellen-Kugellager und die Innenrad-Abtriebswellen-Einheit 110 gezeigt sind.

Das Getriebe von Fig. 18 ist nur ein Beispiel für die Verwendungsmöglichkeiten des Pinrings von Fig. 13 als Zugmittel in einem Getriebe. Vielmehr kann der Pinring von Fig. 13 und auch die anderen in Fig. 1 bis 17 gezeigten Pinringe auch in anderen Getrieben als Zugmittel eingesetzt werden.

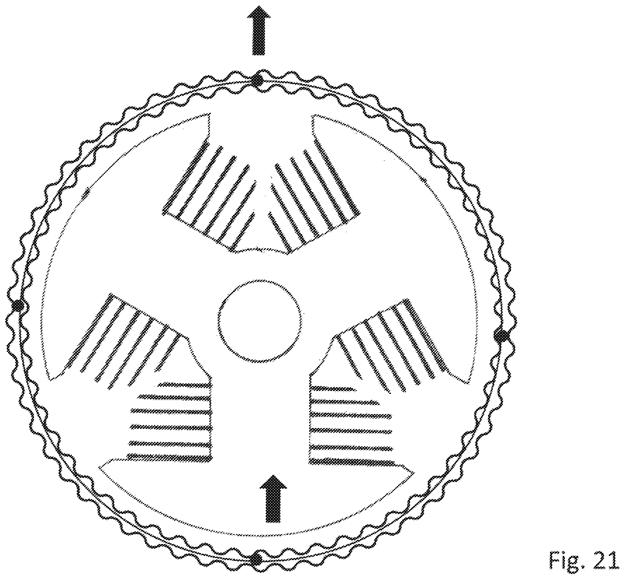

Die in Fig. 1 bis 17 gezeigten Pinringe sind dazu geeignet, in einem Untersetzungsgetriebe als Zugmittel zwischen einer Innenverzahnung und einer Außenverzahnung eingesetzt zu werden, wobei der jeweilige Pinring in die Innenverzahnung und in die Außenverzahnung des Untersetzungsgetriebes eingreift. Dabei kann es sich speziell um eine Getriebe mit einem Transmitter handeln, der den Pinring von der Innenverzahnung abhebt und gegen die Außenverzahnung drückt. Die folgenden Figuren 21 - 27 zeigen Getriebekomponenten von Getrieben mit einem rotorlosen Motor, bei denen das jeweilige Getriebe durch Verformung oder Verschiebung eines Zugmittels oder Verschiebung einer Innen- oder Außenverzahnung mittels elektromagnetischer Kräfte eines Stators angetrieben wird. Dabei bewegen die elektromagnetischen Kräfte eine erste Verzahnung oder Pins an einer zweiten Verzahnung entlang, die dadurch in eine Drehbewegung versetzt wird, wobei die elektromagnetischen Kräfte vorwiegend in einer radialen Richtung wirken.

Dies steht im Gegensatz zu Getrieben mit einem Rotor, bei denen zunächst eine Rotationsbewegung eines Rotors erzeugt wird, aus der erst dann eine Radialbewegung erzeugt wird, wie beispielsweise bei einem Spannwellengetriebe mit einer auf einem verformbaren Kugellager gelagerten Stahlbüchse.

Die Getriebekomponenten von Fig. 21 bis 27 können insbesondere in einem Exzentergetriebe, einem Zykloidgetriebe oder einem harmonischen Ketten- oder Pinring-Getriebe zur Erzeugung einer Getriebeuntersetzung oder -übersetzung verwendet werden.

Zur Erzeugung der Kraft auf die Pins bzw. die Verzahnung durch ein elektromagnetisches Feld des Stators kann die Verzahnung oder die Pins mit magnetischen Bereichen oder mit Permanentmagneten versehen sein oder aus einem magnetischen Material bestehen. Die Verzahnung oder die Pins kann auch zusätzlich zu der Führung durch die elektromagnetischen Kräfte durch eine mechanische Führung geführt werden, insbesondere wenn die gesamte Verzahnung oder der gesamte Pinring auf einer vorbestimmten Bahn, beispielsweise auf einer exzentrischen Kreisbahn, geführt wird.

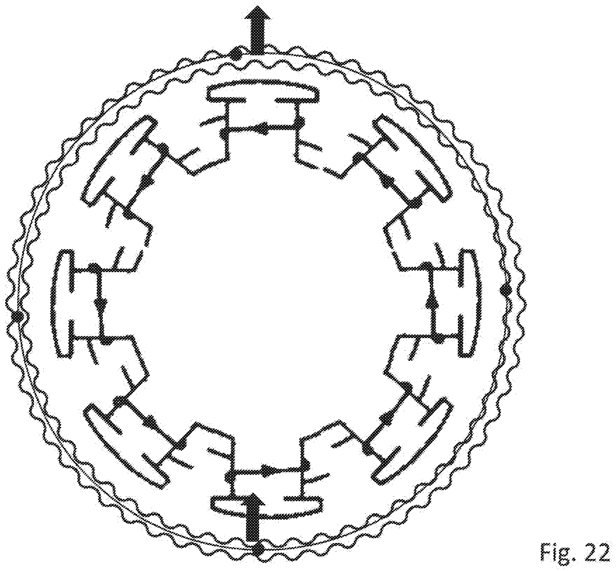

Die Figuren 21 und 22 zeigen Getriebe, bei denen ein Zugmittel, insbesondere ein Pinring, durch elektromagnetische Kräfte eines Motors an einer inneren Verzahnung und an einer äußeren Verzahnung entlang bewegt wird.

In Fig. 21 und 22 ist durch einen unteren Pfeil angezeigt, dass ein Pinring in einem ersten Bereich von einer Außenverzahnung wegbewegt und in eine Innenverzahnung hineingedrückt wird und in einem dazu radial gegenüberliegenden zweiten Bereich von der Innenverzahnung weggedrückt und in eine Außenverzahnung hineingedrückt wird. Der erste Bereich ist ein Bereich minimalen Kontakts oder Eingriffs mit der Außenverzahnung und maximalen Kontakts oder Eingriffs mit der Innverzahnung. Der zweite Bereich ist ein Bereich maximalen Kontakts oder Eingriffs mit der Außenverzahnung und minimalen Kontakts oder Eingriffs mit der Innverzahnung. Die Statorwindungen des Stators werden so angesteuert oder bestromt, dass der erste Bereich und der dazu gegenüberliegende zweite Bereich um eine zentrale Mittelachse rotieren.

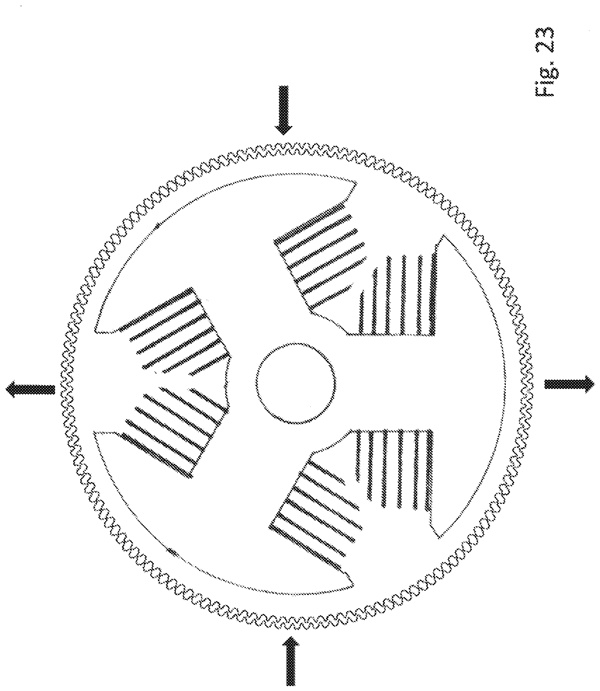

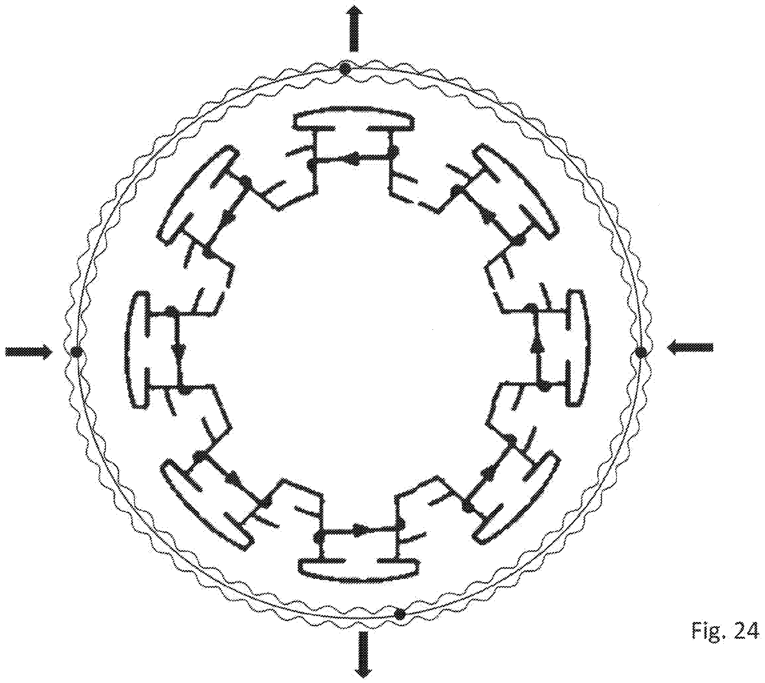

Die Figuren 23 und 24 zeigen Getriebe, bei denen ein Zugmittel, insbesondere ein Pinring, durch elektromagnetische Kräfte eines Motors elliptisch verformt und dadurch an einer inneren Verzahnung und an einer äußeren Verzahnung entlang bewegt wird.

In Fig. 23 und 24 ist durch ein senkrechtes Paar von Pfeilen angezeigt, dass ein Pinring in einem ersten Bereich und einem radial dazu gegenüberliegenden zweiten Bereich auseinandergedrückt wird, und es ist durch ein waagerechtes Paar von Pfeilen angezeigt, dass der Pinring in einem dritten Bereich und einem radial dazu gegenüberliegenden vierten Bereich zusammengezogen wird. Dabei erfolgt das Auseinanderdrücken, das Zusammenziehen oder beide durch von dem Stator ausgeübte elektromagnetische Kräfte, wobei die elektromagnetischen Kräfte insbesondere elektrostatische Kräfte sein können. Der dritte und der vierte Bereich sind gegenüber dem ersten Bereich und dem zweiten Bereich um 90 Grad versetzt.

Der erste Bereich und der zweite Bereich sind Bereiche minimalen Kontakts oder Eingriffs mit der Innenverzahnung und maximalen Kontakts oder Eingriffs mit der Innverzahnung. Der dritte Bereich und der vierte Bereich sind Bereiche maximalen Kontakts oder Eingriffs mit der Innenverzahnung und minimalen Kontakts oder Eingriffs mit der Außenverzahnung. Die Statorwindungen des Stators werden so angesteuert oder bestromt, dass der erste Bereich, der zweite Bereich, der dritte Bereich und der vierte Bereich um eine zentrale Mittelachse rotieren.

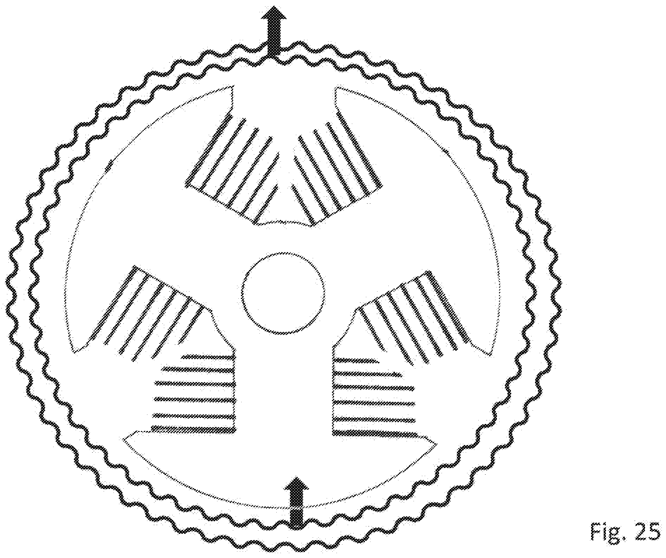

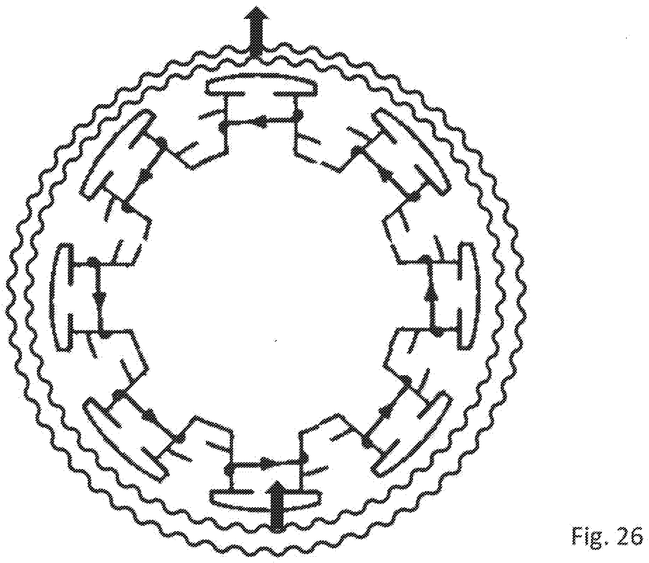

Die Figuren 25 und 26 zeigen Getriebe, bei denen eine Innenverzahnung durch elektromagnetische Kräfte eines Stators an einer äußeren Verzahnung entlang bewegt wird, ähnlich wie dies zum Beispiel bei einem Zykloidgetriebe der Fall ist. Bei diesen Getriebevarianten ist kein Zugmittel zwischen der Innenverzahnung und der Außenverzahnung angeordnet. Stattdessen greift die Innenverzahnung direkt in die Außenverzahnung ein oder rollt auf der Außenverzahnung ab.

In Fig. 25 und 26 ist durch einen unteren Pfeil angezeigt, dass eine Innenverzahnung in einem ersten Bereich von einer Außenverzahnung wegbewegt wird und in einem dazu radial gegenüberliegenden zweiten Bereich in die Außenverzahnung hineingedrückt wird.

Der erste Bereich ist ein Bereich minimalen Kontakts oder Eingriffs mit der Außenverzahnung. Der zweite Bereich ist ein Bereich maximalen Kontakts oder Eingriffs mit der Außenverzahnung. Die Statorwindungen des Stators werden so angesteuert oder bestromt, dass der erste Bereich und der dazu gegenüberliegende zweite Bereich um eine zentrale Mittelachse rotieren.

Die Figuren 21 bis 26 zeigen Drei- oder Sechspol-Elektromotore bzw. Statoren. Es können aber auch Elektromotoren mit 4 Polschuhen oder mit mehr als 6 Polschuhen verwendet werden. Aus Gründen der Übersichtlichkeit sind die Windungen bei den Dreipolmotoren in Fig. 21 bis 26 nicht gezeigt und die Anschlüsse der Windungen bei dem Sechspolmotoren sind in Fig. 21 bis 26 nicht gezeigt.

Jeder Polschuh eines Elektromotors gemäß der vorliegenden Beschreibung kann eigene Wicklung aufweisen, die separat angesteuert wird oder es können Polschuhe in Reihe geschaltet sein und gemeinsam angesteuert werden. Die in Reihe geschalteten Polschuhe können gleichviele Wicklungen oder unterschiedlich viele Wicklungen aufweisen und sie können im gleichen Sinn oder gegensinnig gewickelt sein. Insbesondere können gegenüberliegende Polschuhe zur Erzeugung von gleichgroßen einander entgegengesetzter Kräften jeweils in Reihe geschaltet und entgegengesetzt gewickelt sein, was beispielsweise für eine elliptische Deformation eines Pinrings vorteilhaft ist.

Weiterhin ist es auch möglich, dass nicht jeder Polschuh mit einer Wicklung versehen ist, sondern dass beispielsweise nur jeder zweite Polschuh umwickelt ist. Wenn die Polschuhe einzeln ansteuerbar sind, beispielsweise durch eine Leistungselektronik, oder wenn jeweils Paare von gegenüberliegenden Polschuhen einzeln ansteuerbar sind ergibt sich eine verbesserte Feinkontrolle der Ansteuerung.

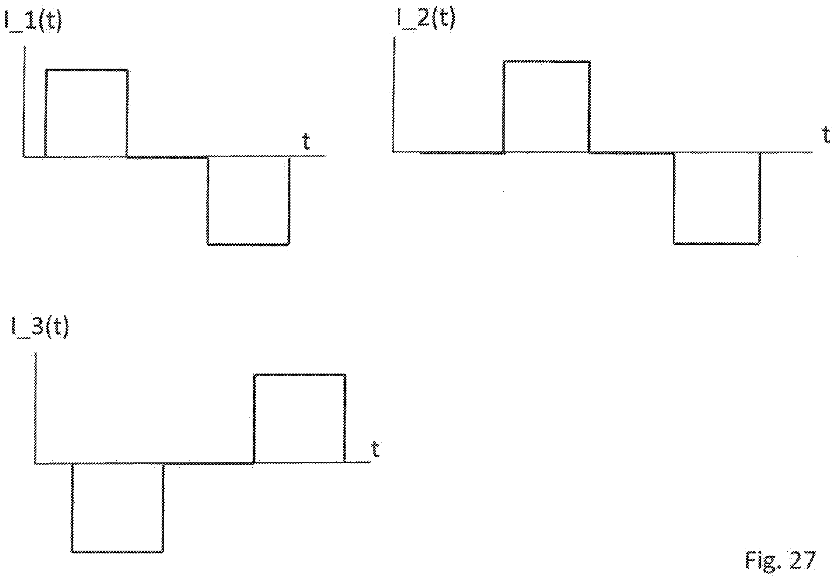

Fig. 27 zeigt ein Beispiel einer einfachen Ansteuerung eines dreipoligen Motors, bei denen die Polschuhe des dreipoligen Motors separat bestromt werden, wobei ein vordefiniertes Signal verwendet wird. Hierbei ist die Bestromung I3(t) des dritten Polschuhs entgegengesetzt zu der Bestromung I1(t) des ersten Polschuhs und die Bestromung I2(t) des zweiten Polschuhs ist um die Zeitdauer des konstanten Signals von I1(t) gegenüber der Bestromung des ersten Polschuhs phasenverschoben. Die entgegengesetzte Bestromung kann zum Beispiel durch entgegengesetzte Wicklung oder auch durch separate Bestromung erzielen werden.

Je nach Erfordernis sind auch aufwendigere Ansteuerungen möglich. Beispielsweise kann eine Amplitude variieren anstatt abschnittsweise konstant zu sein, wie in Fig. 27 gezeigt. Weiterhin kann zur Verbesserung der Ansteuerung der Statorspulen ein Regelkreis wie beispielsweise ein PID Regler anstatt der in Fig. 27 gezeigten Feed-Forward Steuerung verwendet werden.

Als Sensorsignale für den Regelkreis können die Stromsignale in den Statorspulen verwendet werden, wodurch vermieden werden kann, dass separate Sensoren, wie beispielsweise Hall-Sensoren, eingebaut werden. Beispielsweise können die Stromsignale in einer Ansteuerungspause gemessen werden, in der die jeweilige Statorwicklung nicht bestromt ist. Die Parameter des Regelkreises können gemäß den Erfordernissen verändert werden, beispielsweise zur Erzeugung eines vorbestimmten Drehmoments oder zur Erzeugung einer vorbestimmten Rotationsgeschwindigkeit.

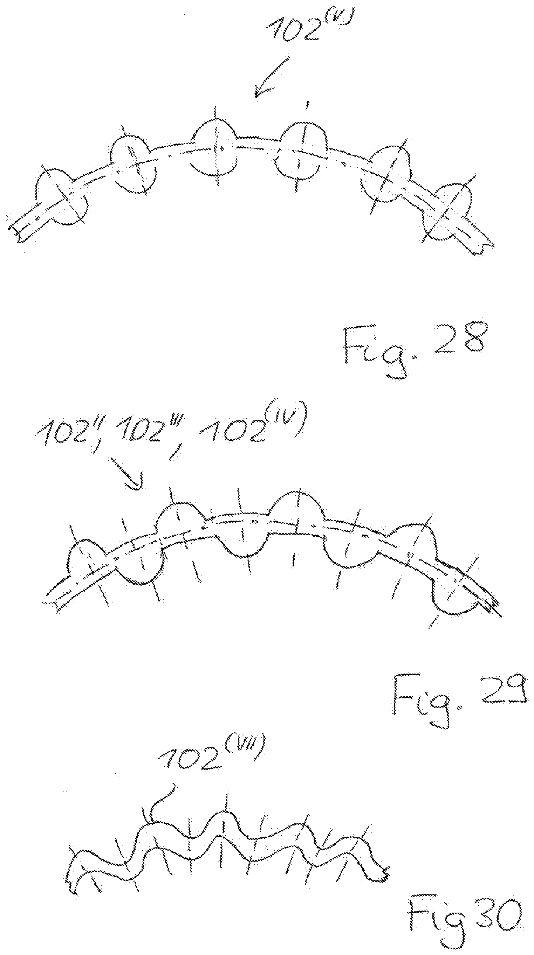

Fig. 28 zeigt einen Querschnitt durch einen Zahnriemen 102^{(V)} mit einer symmetrischen Lücken-Anordnung.

Fig. 29 zeigt einen Querschnitt durch einen Zahnriemen 102'', 102‴, 102^{(IV)} mit einer verschobenen Lücken-Anordnung.

Fig. 30 zeigt einen Querschnitt durch einen Zahnriemen 102^{(VII)} mit einer verschobenen Lücken-Anordnung, bei der eine Rückseite der Innenverzahnung die Außenverzahnung bildet. In den Figuren 28 - 30 ist eine Dicke des Zahnriemens gegenüber einer Höhe der Verzahnungen nicht maßstäblich eingezeichnet.

Die Dimensionierung gegenüberliegender Verzahnungen und, wenn vorhanden, eines dazwischenliegenden Übertragungsmittels kann gemäß der vorliegenden Beschreibung insbesondere so gewählt sein, dass ein vollständiger Zahneingriff

## Patentansprüche

1. Getriebe mit einer Eingangswelle und mit einer Ausgangswelle wobei das Getriebe die folgenden Merkmale aufweist:
- ein Außenrad und ein konzentrisch zum Außenrad im Inneren des Außenrads angeordnetes Innenrad sowie ein sich zwischen Außenrad und Innenrad erstreckendes Zugmittel,
- wenigstens einen umlaufenden Transmitter, der das Zugmittel vom äußeren Umfang des Innenrads abhebt und an den inneren Umfang des Außenrads drückt,
- wobei die Ausgangswelle mit dem Innenrad verbunden ist,
- wobei der wenigstens eine umlaufende Transmitter mit der Eingangswelle verbunden ist,
- wobei das Außenrad mit einem Getriebegehäuse verbunden ist,
- wobei ein Elektromotor vorgesehen ist, dessen Rotor mit der Eingangswelle des Getriebes verbunden ist, wobei das Zugmittel ein Zahnriemen (102^{(III)}) mit einer Innenverzahnung (106') und einer Außenverzahnung (105`) ist, und die Außenverzahnung (105") in eine Innenverzahnung vom Aussenrad eingreift, und
- wobei die Innenverzahnung (106") in die Außenverzahnung vom Innenrad eingreift, und wobei Zahnköpfe der Innenverzahnung (106') einen abgerundeten Bereich mit einem kreisabschnittsförmigen Querschnitt aufweisen und wobei Zahnköpfe der Außenverzahnung (105`) einen abgerundeten Bereich mit einem kreisabschnittsförmigen Querschnitt aufweisen, und wobei ein als Zahngrund ausgebildeter Bereich zwischen zwei benachbarten Zahnköpfen der Innenverzahnung (106') mindestens so breit wie eine Zahnbreite von Zähnen der Innenverzahnung (106') ist, und wobei ein als Zahngrund ausgebildeter Bereich zwischen zwei benachbarten Zahnköpfen der Außenverzahnung (105`) mindestens so breit wie eine Zahnbreite von Zähnen der Außenverzahnung (105') ist,
wobei die Zahnköpfe der Innenverzahnung (106') radial gegenüber den Zahngründen der Außenverzahnung (105`) angeordnet sind, so dass der Zahnriemen (102^{(III)}) eine versetzte Lücken-Anordnung aufweist, bei welcher die Zähne der Innenverzahnung (106`) und der Außenverzahnung (105') gegeneinander versetzt sind, und
wobei der Zahnriemen (102^{(III)}) an der Innenseite einen glatten zentralen Auflagebereich (107) und an der Außenseite einen zentralen Auflagebereich (108) aufweist, wobei der umlaufende Transmitter die innere Auflagefläche (107) kontaktiert.

2. Fahrzeug, insbesondere Zweirad oder Dreirad, mit einer Motor-Getriebe-Einheit nach Anspruch 1,
**dadurch gekennzeichnet, daß**
wenigstens ein Laufrad des Fahrzeugs mit der Ausgangswelle des Getriebes verbunden ist.

## Claims

1. Transmission having an input shaft and an output shaft, the transmission comprising the following features:
- an outer gear and an inner gear arranged concentrically to the outer gear inside the outer gear, and a traction mechanism extending between the outer gear and the inner gear,
- at least one revolving transmitter which lifts the traction mechanism from the outer circumference of the inner gear and presses it against the inner circumference of the outer gear,
- wherein the output shaft is connected to the inner gear,
- wherein the at least one revolving transmitter is connected to the input shaft,
- wherein the outer gear is connected to a transmission housing,
- wherein an electric motor is provided, the rotor of which is connected to the input shaft of the transmission, wherein the traction mechanism is a toothed belt (102^{(III)}) having an internal toothing (106') and an external toothing (105'), and the external toothing (105'') engages an internal toothing of the outer gear, and
- wherein the internal toothing (106'') engages the external toothing of the inner gear, and wherein tooth crests of the internal toothing (106') comprise a rounded region with a cross section in the shape of a segment of a circle, and wherein tooth crests of the external toothing (105') comprise a rounded region with a cross section in the shape of a segment of a circle, and wherein a region formed as a tooth base between two adjacent tooth crests of the internal toothing (106') is at least as wide as a tooth width of teeth of the internal toothing (106'), and wherein a region formed as a tooth base between two adjacent tooth crests of the external toothing (105') is at least as wide as a tooth width of teeth of the external toothing (105'),
wherein the tooth crests of the internal toothing (106') are arranged radially opposite the tooth bases of the external toothing (105') so that the toothed belt (102^{(III)}) comprises an offset gap arrangement in which the teeth of the internal toothing (106') and the external toothing (105') are offset from one another, and
wherein the toothed belt (102^{(III)}) comprises a smooth central bearing region (107) on the inside and a central bearing region (108) on the outside, wherein the revolving transmitter contacts the inner bearing surface (107).

2. Vehicle, in particular two-wheeler or three-wheeler, with a motor-transmission unit according to claim 1,
**characterised in that**
at least one running wheel of the vehicle is connected to the output shaft of the transmission.

## Revendications

1. Engrenage avec un arbre d'entrée et avec un arbre de sortie, l'engrenage comportant les caractéristiques suivantes :
- une roue extérieure et une roue intérieure disposée concentriquement à la roue extérieure à l'intérieur de la roue extérieure, ainsi qu'un moyen de traction s'étendant entre la roue extérieure et la roue intérieure,
- au moins un transmetteur rotatif qui soulève le moyen de traction du périmètre extérieur de la roue intérieure et le pousse contre le périmètre intérieur de la roue extérieure,
- l'arbre de sortie étant relié à la roue intérieure,
- ledit au moins un transmetteur rotatif étant relié à l'arbre d'entrée,
- la roue extérieure étant reliée à un boîtier de transmission,
- dans lequel un moteur électrique est prévu, dont le rotor est relié à l'arbre d'entrée de l'engrenage, le moyen de traction est une courroie dentée (102^{(III)}) avec une denture intérieure (106') et une denture extérieure (105'), et la denture extérieure (105'') s'engrène dans une denture intérieure de la roue extérieure, et
- dans lequel la denture intérieure (106'') s'engrène dans la denture extérieure de la roue intérieure, et des têtes de dents de la denture intérieure (106') comportent une zone arrondie avec une section transversale en forme de segment de cercle et des têtes de dents de la denture extérieure (105') comportent une zone arrondie avec une section transversale en forme de segment de cercle, et dans lequel une zone réalisée comme fond de dent entre deux têtes de dent voisines de la denture intérieure (106') est au moins aussi large qu'une largeur de dent de dents de la denture intérieure (106'), et dans lequel une zone réalisée comme fond de dent entre deux têtes de dent voisines de la denture extérieure (105') est au moins aussi large qu'une largeur de dent de dents de la denture extérieure (105'),
dans lequel les têtes de dents de la denture intérieure (106') sont disposées radialement par rapport aux fonds de dents de la denture extérieure (105'), de sorte que la courroie dentée (102^{(III)}) comporte un agencement d'espace décalé, dans lequel les dents de la denture intérieure (106') et de la denture extérieure (105') sont décalées les unes par rapport aux autres, et
dans lequel la courroie dentée (102^{(III)}) comporte sur le côté intérieur une zone d'appui centrale lisse (107) et sur le côté extérieur une zone d'appui centrale (108), dans lequel le transmetteur rotatif est en contact avec la surface d'appui intérieure (107).

2. Véhicule, en particulier un cycle à deux roues ou un cycle à trois roues, avec une unité moteur-engrenage selon la revendication 1,
**caractérisé en ce**
**qu'**au moins une roue de roulement du véhicule est reliée à l'arbre de sortie de l'engrenage.
